# EUROPÄISCHE PATENTSCHRIFT

(11) **EP 0 553 374 B1**
(45) Veröffentlichungstag und Bekanntmachung des Hinweises auf die Patenterteilung: **26.03.1997**
(21) Anmeldenummer: 92101461.9
(22) Anmeldetag: 29.01.1992
(51) Int. Cl.: G06F 13/364

(54) **Ein-/Ausgabesystem für Datenverarbeitungsanlagen**
Input/output system for data processing system
Système d'entrée/sortie pour un système de traitement de données

(43) Veröffentlichungstag der Anmeldung: 04.08.1993
(73) Patentinhaber: Siemens Nixdorf Informationssysteme Aktiengesellschaft, 33102 Paderborn (DE)
(72) Erfinder: Klan, Friedrich, Dr. rer. nat., W-8028 Taufkirchen (DE); Backhaus, Werner, Dipl.-Phys., W-8000 München 70 (DE); Dietl, Erich, Dipl.-Ing., W-8200 Rosenheim (DE); Schulz, Winfried, Dr. rer. nat., W-8170 Bad Tölz (DE)
(74) Vertreter: Fuchs, Franz-Josef, Dr.-Ing.

(56) Entgegenhaltungen:
- EP-A- 0 297 480
- US-A- 3 297 996
- US-A- 3 665 398
- US-A- 4 962 379
- IBM TECHNICAL DISCLOSURE BULLETIN Bd. 33, Nr. 3A, August 1990, ARMONK, NY, US Seiten 390 - 393; ANON.: 'HARDWARE DESIGN FOR BUS ARBITRATION'

## Beschreibung

Die Erfindung betrifft ein Ein-/Ausgabesystem mit mehreren an ein gemeinsames Leitungssystem angeschlossenen Ein-/Ausgabemodulen für Datenverarbeitungsanlagen gemäß dem Oberbegriff des Patentanspruches 1.

Derartige Ein-/Ausgabesysteme sind bereits bekannt, z.B. durch die europäische Patentanmeldung EP-0 297 480-A1.

Theoretisch kann man ein gemeinsames Leitungssystem für beliebig viele Ein-/Ausgabemodule, wie z.B. Bytemultiplexkanalsteuerungen, Blockmultiplexkanalsteuerungen, Plattensteuerungen oder Bandsteuerungen vorsehen, was aber beim überwiegenden Teilausbau unnötige kostensteigernde Vorleistungen erfordert. Andererseits könnte man die Anzahl der an ein gemeinsames Leitungssystem anschließbaren Ein-/Ausgabemodule begrenzen und statt dessen bei einer den vorgegebenen Grenzwert übersteigenden Anzahl von Ein-/Ausgabemodulen ein weiteres oder mehrere weitere Leitungssysteme mit einer individuellen Steuereinheit vorsehen, die wie die übrigen Verarbeitungsprozessoren der Datenverarbeitungsanlage mit der Zugriffssteuerung des gemeinsamen Arbeitsspeichers gekoppelt sind. Will man dabei eine gleichberechtigte Behandlung aller Ein-/Ausgabemodule durch die Zugriffssteuerung sicherstellen, ist in der Regel eine Änderung des Prioritätsschemas für die Abwicklung von Anforderungen durch die Zugriffssteuerung erforderlich, da diese in der Regel steckplatzabhängig ist und mit fester Prioritätsrangfolge arbeitet. Voraussetzung hierfür ist außerdem, daß entsprechende weitere Anschlüsse der Zugriffssteuerung für die Anschaltung weiterer Leitungssysteme zur Verfügung stehen.

Aufgabe der Erfindung ist es daher, ein leistungsstarkes Ein-/Ausgabesystem zu schaffen, bei dem die Anzahl der angeschlossenen Ein-/Ausgabemodule in weitem Rahmen schwanken kann, und das ohne Eingriff in das Prioritätsschema der Zugriffssteuerung eine weitgehende gleichberechtigte Behandlung aller Ein-/Ausgabemodule ohne allzu große Vorleistungen ermöglicht. Diese Aufgabe wird durch die kennzeichnenden Merkmale des Patentanspruches 1 gelöst.

Danach wird die Vorleistung für die Anschaltung von Ein-/Ausgabemodulen an ein gemeinsames Leitungssystem herabgesetzt, in dem nur eine beschränkte Anzahl von Ein-/Ausgabemodulen von einem Leitungssystem bedient wird. Sind darüber hinaus weitere Ein-/Ausgabemodule vorzusehen, dann werden diese einem weiteren gemeinsamen Leitungssystem zugeordnet. Die Leitungssysteme werden außerdem nicht getrennt voneinander an die Zugriffssteuerung angeschlossen, sondern parallel an einen gemeinsamen Anschluß, so daß sich keine Änderung für die Zugriffssteuerung ergibt. Anforderungen der parallelen Leitungssysteme werden durch die gesonderte Anforderungsüberwachungseinheit unabhängig von der augenblicklichen Lastverteilung auf den einzelnen Leitungssystemen durch die dynamische Änderung des Prioritätsranges der einzelnen Leitungssysteme immer abwechselnd berücksichtigt und die Leitungssysteme somit gleichberechtigt behandelt. Gegenüber einem einzigen Leitungssystem ergibt sich bei mehreren unabhängigen Leitungssystemen außerdem der Vorteil einer Leistungssteigerung, da Anforderungen der Ein-/Ausgabemodule eines Leitungssystems unabhängig von dem Betrieb auf einem parallelen Leitungssystem aufbereitet und bis zum Anschluß zur Zugriffssteuerung weitergeleitet werden können, so daß die Anforderungen unmittelbar nach ihrer Freigabe an der Zugriffssteuerung wirksam werden können.

Weiterbildungen der Erfindung ergeben sich aus den Unteransprüchen 2 bis 9. Diese beziehen sich auf die Strukturierung des Ein-/Ausgabesystems, auf die Ausbildung der gesonderten Anforderungsüberwachungseinheit und auf die mögliche unterschiedliche Ausbildung der einzelnen Leitungssysteme.

Einzelheiten der Erfindung seien nachfolgend anhand von in der Zeichnung dargestellten Ausführungsbeispielen näher erläutert. Im einzelnen zeigen
- FIG 1: ein Strukturschaltbild einer Datenverarbeitungsanlage mit einem Ein-/Ausgabesystem gemäß der Erfindung,
- FIG 2: ein Strukturschaltbild des Ein-/Ausgabesystems gemäß der Erfindung mit direktem Anschluß der Leitungssysteme an die Anschlußeinheit,
- FIG 3: ein Schaltbild der gesonderten Anforderungsüberwachungseinheit für zwei parallele Leitungssysteme,
- FIG 4: ein Schaltbild der gesonderten Anforderungsüberwachungseinheit für mehr als zwei parallele Leitungssysteme und
- FIG 5: ein Strukturschaltbild des Ein-/Ausgabesystems gemäß der Erfindung mit indirektem Anschluß der Leitungssysteme an die Anschlußeinheit.

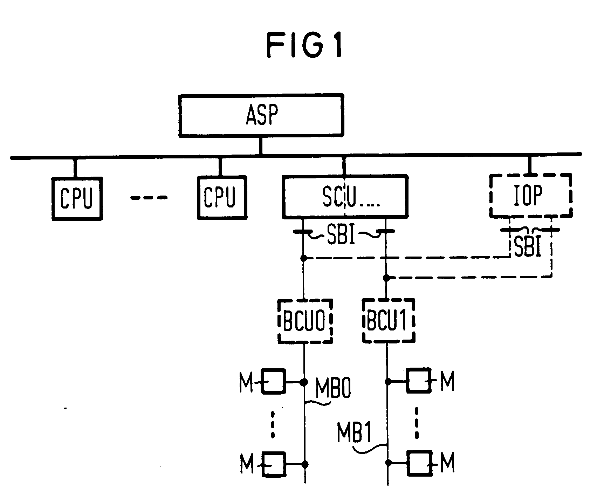

Das Strukturschaltbild von FIG 1 zeigt den Aufbau einer Datenverarbeitungsanlage mit einem oder mehreren Speichermodulen eines Arbeitsspeichers ASP, zu dem über eine Zugriffssteuerung, die als Bussystem CSBUS ausgebildet sein kann, ein oder mehrere Verarbeitungsprozessoren CPU und das Ein-/Ausgabesystem zugreifen können. Letzteres besteht aus einer Anschlußeinheit SCU, die auch in einen eigenständien Ein-/Ausgabeprozessor IOP integriert sein kann, und aus z.B. zwei Leitungssystemen MB0 und MB1 zum Anschluß von Ein-/Ausgabemodulen M. Die Leitungssysteme MB... können beliebig ausgebildet und an die Anschlußeinheit SCU oder den entsprechenden Teil des Ein-/Ausgabeprozessors IOP - wie gestrichelt angedeutet - angeschlossen sein, und zwar direkt oder aber unter Zwischenschaltung einer gesonderten Leitungssystemsteuereinheit BCU0 bzw. BCU1.

Letzteres ist insbesondere dann von Vorteil, wenn es sich um verschieden ausgebildete Leitungssysteme mit unterschiedlichen Schnittstellenbedingungen handelt, die von der Leitungssystemsteuerung zu berücksichtigen sind. Die Anschlußschnittstellen SBI zur Anschlußsteuereinheit SCU und zum Ein-/Ausgabeprozessor IOP können dann einheitlich ausgebildet sein. Dabei können z.B. an einem Leitungssystem, z.B. MULTIBUS II - Intel-Druckschrift Nr. 146067 - C, die üblichen Kanalmodule zur Bedienung von externen Gerätesteuerungen über Standardschnittstellen angeschlossen sein, während das andere Leitungssystem, z.B. MULTIBUS I - Intel-Druckschrift Nr. 9800683 - 04, die Verbindung zu einem weiteren eigenständigen Rechner mit zugehöriger Peripherie herstellt.

Abgesehen von der in FIG 1 dargestellten Struktur können an die Anschlußsteuereinheit SCU oder den Ein-/Ausgabeprozessor IOP auch mehr als zwei Leitungssysteme MB... für Ein-/Ausgabemodule M angeschlossen sein, und bei größeren Datenverarbeitungsanlagen können auch mehrere Anschlußsteuereinheiten SCU oder Ein-/Ausgabeprozessoren IOP für jeweils zwei Leitungssysteme MB... vorgesehen werden.

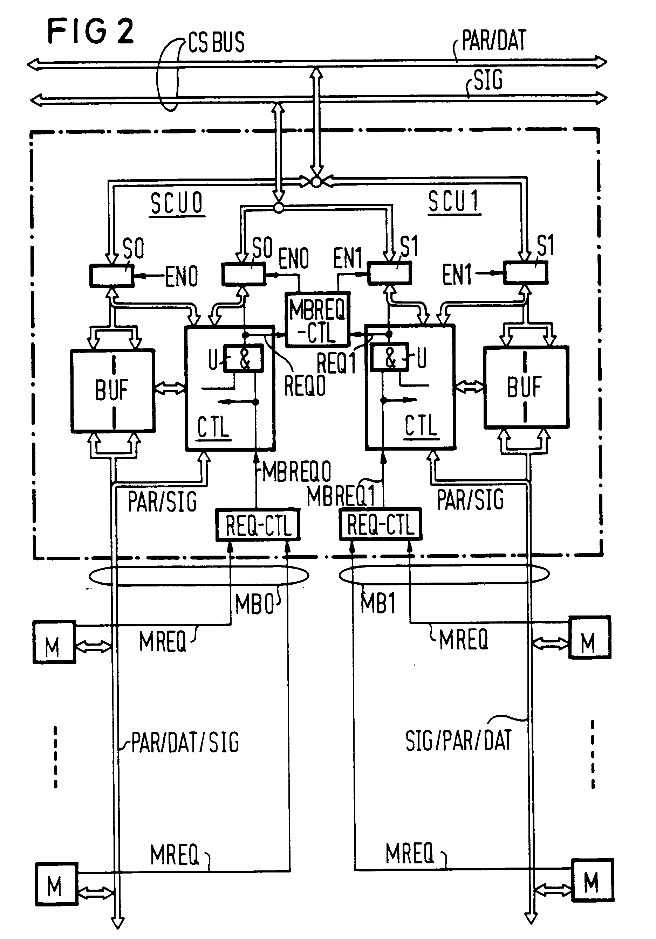

FIG 2 zeigt das vereinfachte Strukturschaltbild der Anschlußsteuereinheit SCU mit direktem Anschluß von zwei gleichartigen Leitungssystemen MB0 und MB1 mit den Ein-/Ausgabemodulen M. Die Anschlußsteuereinheit SCU besteht entsprechend aus zwei gleichartig aufgebauten Teilsteuereinheiten SCU0 und SCU1, deren Anschlußleitungen zur Zugriffssteuerung CSBUS parallel an denselben Anschluß angeschaltet sind, als handle es sich um eine einzige Steuereinheit.

Jede Teilsteuereinheit SCU... nimmt dabei mit Bezug auf das angeschlossene gemeinsame Leitungssystem MB... die Funktion einer Leitungssystemsteuerung und mit Bezug auf das Zugriffssystem CSBUS die Funktion einer Verarbeitungseinheit wahr, wobei die beidseitigen Übertragungswege, nämlich einmal zwischen dem Arbeitsspeicher ASP und der Teilsteuereinheit SCU... und zum anderen zwischen der Teilsteuereinheit SCU... und dem jeweils angeschlossenen Leitungssystem MB... zweckmäßig voneinander entkoppelt betrieben werden, indem Pufferspeicher BUF abhängig von der jeweiligen Übertragungsrichtung Parameter PAR und Daten DAT von einem der beiden Übertragungswege entgegennehmen und an den jeweils anderen weiterleiten. Wechselpuffer ermöglichen dabei die gleichzeitige Übertragung auf beiden Übertragungswegen, also z.B. den Transfer von Lesedaten aus dem Arbeitsspeicher ASP zur Teilsteuerung SCU... und gleichzeitig z.B. die Entgegennahme einer Anforderung vom angeschlossenen Leitungssystem MB... zum Schreiben von Daten in den Arbeitsspeicher. Die gesamte Steuerung einer Teilsteuereinheit SCU... zum Betrieb der Pufferspeicher BUF und der beidseitigen Schnittstellen ist jeweils in der Ablaufsteuereinheit CTL zusammengefaßt dargestellt.

Im vorliegenden Fall ist unterstellt, daß die Anforderungen MREQ der einzelnen Ein-/Ausgabemodule M des jeweiligen Leitungssystems MB0 bzw. MB1 von einer zentralen Anforderungs- und Auswahleinrichtung REQ-CTL überwacht werden, die gleichfalls Bestandteil der einzelnen Teilsteuerungen SCU... ist. Zu diesem Zweck sind die Anforderungsleitungen MREQ der einzelnen Ein-/ Ausgabemodule M neben dem gemeinsamen Leitungsbündel für die übrigen Signale SIG, die Parameter PAR und die Daten DAT gesondert dargestellt. Die jeweils ausgewählte Anforderung MREQ des Leitungssystems wird dann mit MBREQ der Ablaufsteuereinrichtung CTL gemeldet, die schließlich die Übernahme der zugehörigen Parameter PAR der Anforderung und der gegebenenfalls zugehörigen Daten DAT vom Leitungssystem MB... in den Pufferspeicher BUF steuert.

Erst wenn die übernommene Anforderung mit den zugehörigen Parametern und Daten zur Weiterleitung in der Teilsteuerung SCU zur Verfügung steht, wird das Anforderungssignal MBREQ über das UND-Glied U als Anforderung REQ... für die Zugriffssteuerung CSBUS freigegeben. Ob die Freigabe zur unmittelbaren Weiterleitung an die Zugriffssteuerung CSBUS führt, ist dagegen von der gesonderten Anforderungsüberwachungseinheit MBREQ-CTL gemäß der Erfindung abhängig, die das Vorliegen von weiterzuleitenden Anforderungen beider Leitungssysteme MB0 und MB1 überwacht. Abhängig von der jeweils ausgewählten Anforderung REQ0 oder REQ1 werden dann die die Anschlußleitung zum gemeinsamen Anschluß der Zugriffssteuerung CSBUS durchschaltenden Schalter S0 bzw. S1 mit dem Steuersignal EN0 bzw. EN1 wirksam geschaltet und die Anforderung an die Zugriffssteuerung CSBUS weitergeleitet. Diese Schalter S0 bzw. S1 bleiben anschließend solange betätigt, bis der mit der Anforderung verbundene Datentransfer auf dem Übertragungsweg zwischen dem Arbeitsspeicher ASP und dem Pufferspeicher BUS der Teilsteuereinheit SCU0 bzw. SCU1 ausgeführt ist. Erst danach wird das Anforderungssignal MBREQ wieder abgeschaltet und der bestehende Übertragungsweg durch die Schalter S0 bzw. S1 wieder aufgetrennt.

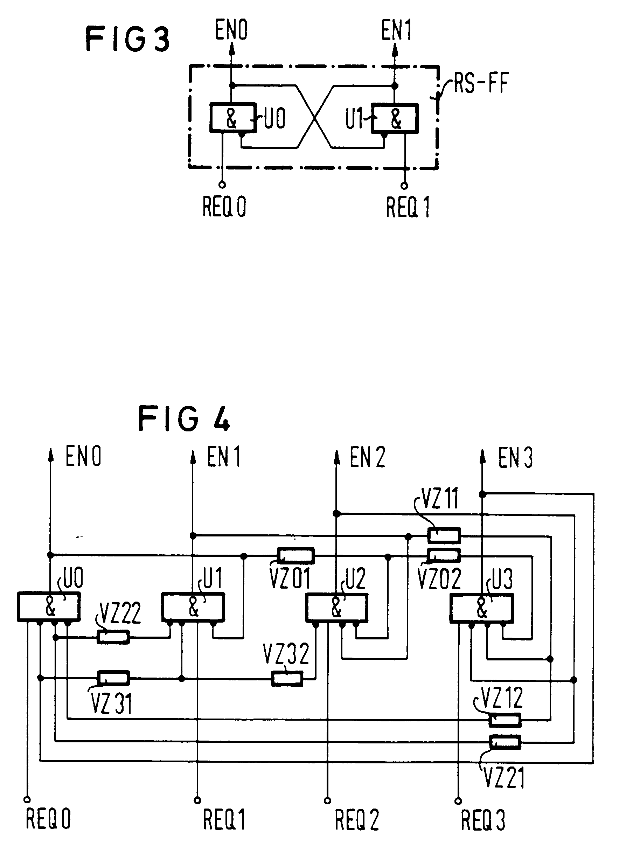

Die gesonderte Anforderungsüberwachungseinheit MBREQ-CTL arbeitet dabei in der Weise, daß einerseits die jeweils zuerst vorliegende Anforderung berücksichtigt wird, andererseits aber bei gleichzeitig vorliegenden Anforderungen diese abwechselnd berücksichtigt werden. Bei zwei Leitungssystemen MB0 und MB1, wie im vorliegenden Fall, kann die gesonderte Anforderungsüberwachungseinheit gemäß FIG 3 aus einem einfachen RS-Flip-Flop RS-FF bestehen, das von zwei UND-Gliedern U0 und U1 mit jeweils zwei Steuereingängen gebildet wird. Auf den einen Steuereingang wirkt jeweils das Anforderungssignal REQ0 bzw. REQ1 eines der Leitungssysteme MB0 bzw. MB1 ein, während der andere Steuereingang jeweils mit dem invertierten Ausgangssignal des jeweils anderen Und-Gliedes U1 bzw. U0 beschaltet ist.

Sobald von den beiden Anforderungssignalen REQ... nur eines, z.B. REQ0, wirksam ist, wird das zugehörige UND-Glied U0 aufgesteuert, das mit seinem Ausgangssignal EN0 die zugehörigen Schalter S0 wirksam schaltet und zugleich das andere UND-Glied U1 sperrt, so daß eine nachfolgende Anforderung REQ1 des anderen Leitungssystems MB1 nicht berücksichtigt wird, bis die Anforderung REQ0 wieder abgeschaltet und das UND-Glied U1 freigegeben wird. Durch das kurzzeitige Abschalten des Anforderungssignals, z.B. REQ0, einer berücksichtigten Anforderung, auch wenn eine weitere Anforderung desselben Leitungssystems bereits vorliegt, erfolgt also immer eine Umschaltung auf das andere Leitungssystem, wenn hierfür eine Anforderung vorliegt. Kein Leitungssystem kann daher dem anderen Leitungssystem den Zugang zur Zugriffssteuerung CSBUS länger als für die Dauer der Ausführung einer Anforderung verwehren, auch wenn die augenblickliche Lastverteilung auf den beiden Leitungssystemen sehr unterschiedlich ist.

FIG 4 zeigt eine gesonderte Anforderungsüberwachungseinrichtung MBREQ-CTL für Strukturen mit mehr als zwei Leitungssystemen MB.... Ähnlich wie bei der Anordnung von FIG 3 ist wiederum für jedes Anforderungssignal der vier Leitungssysteme eines der UND-Glieder U0 bis U3 vorgesehen, und jedes dieser UND-Glieder liefert bei seiner Aufsteuerung das Freigabesignal EN... für die zugehörigen Schalter S..., während es alle übrigen UND-Glieder sperrt. Um dabei sicherzustellen, daß bei mehreren gleichzeitigen Anforderungen REQ... alle Anforderungen gleichberechtigt behandelt werden, werden die Ausgangssignale der einzelnen UND-Glieder, z.B. UG0, den in der Reihe zyklisch folgenden UND-Gliedern, z.B. UG1, UG2 und UG3, als Sperrsignale mit gestaffelter Laufzeitverzögerung zugeführt, also z.B. dem UND-Glied UG1 unverzögert, dem UND-Glied UG2 um eine Einheit und dem UND-Glied UG3 um zwei Einheiten verzögert. Diese Verzögerungseinheiten sind im dargestellten Ausführungsbeispiel durch Verzögerungsglieder VZxy mit einheitlicher Verzögerungszeit dargestellt, wobei x die Rangziffer des Ausgangssignales und y die Gesamtzahl der wirksamen Verzögerungseinheiten anzeigt.

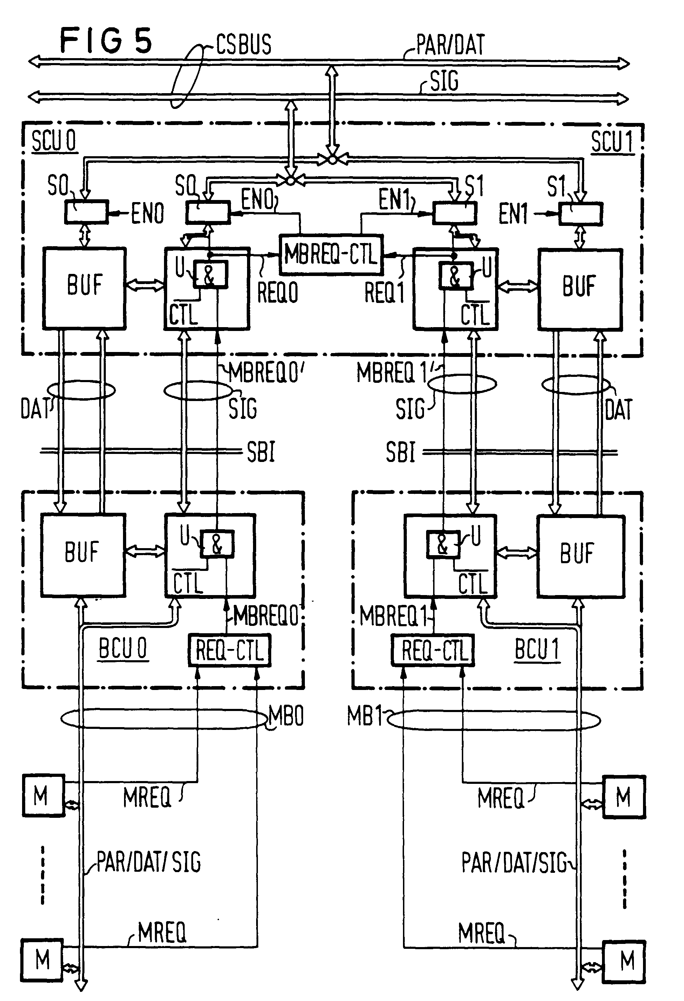

FIG 5 zeigt ein weiteres Ausführungsbeispiel der Erfindung, bei dem gegenüber dem von Figur 2 - wie bereits in Figur 1 gestrichelt angedeutet - die Kopplung der einzelnen Leitungssysteme MB0 und MB1 an die Teilsteuereinheiten SCU0 und SCU1 der Anschlußsteuereinheit nicht direkt, sondern über zwischengeschaltete individuelle Leitungssystemsteuereinheiten BCU0 bzw. BCU1 erfolgt.

Der Aufbau der Teilsteuereinheiten SCU0 und SCU1 entspricht dabei dem beim Ausführungsbeispiel von Figur 2, allerdings mit dem Unterschied, daß einerseits die Anforderungssüberwachungseinheit REQ-CTL für die Anforderungen MREQ der Ein-/Ausgabemodule M in die Leitungssystemsteuereinheiten BCU0 und BCU1 verlagert ist und daß der Verkehr zwischen den Teilsteuereinheiten SCU... und der jeweiligen Leitungssystemsteuereinheit BCU... über einheitliche Schnittstellen SBI mit unidirektional arbeitenden getrennten Leitungen erfolgt, so daß gleichzeitig Übertragungen in den beiden Richtungen erfolgen können.

Die Grundstruktur der Leitungssystemsteuereinheiten BCU ist der der Teilsteuereinheiten SCU... ähnlich und wiederum schematisch in Form der Pufferspeicher BUF und der zusammengefaßten Ablaufsteuerung CTL für die Pufferspeicher und die Schnittstellen dargestellt. Hinzu kommt wiederum bei zentraler Arbitrierung die Anforderungsüberwachungseinheit REQ-CTL für die Entgegennahme und Auswahl der von den Ein-/Ausgabemodulen M am angeschlossenen gemeinsamen Leitungssystem MB... gestellten Anforderungen MREQ. Die jeweils angenommene Anforderung wird mit MBREQ der Ablaufsteuerung CTL gemeldet, die dann in bekannter Weise die Übertragung der zugehörigen Parameter PAR und gegebenenfalls damit verbundener Daten DAT in den Pufferspeicher BUF steuert. Sobald alle mit der Anforderung verbundenen Informationen vorliegen, wird das UND-Glied U aufgesteuert und als Anforderung MBREQ...' mit den zugehörigen Informationen über die Schnittstelle SBI zur angeschlossen Teilsteuereinheit SCU... weitergeleitet, die dann nach Zuteilung des Anschlusses zur Zugriffssteuerung SCBUS durch die gesonderte Anforderungsüberwachungseinheit MBREQ-CTL die Anforderung in der bereits beschriebenen Weise weiterleitet.

Wie bereits erwähnt, können die einzelnen Leitungssysteme MB... für die Ein-/Ausgabemodule unterschiedlich ausgebildet sein und mit unterschiedlichen Schnittstellenbedingungen und unterschiedlichen Übertragungsprotokollen arbeiten. Entsprechend unterschiedlich sind dann die zugehörigen Leitungssystemsteuerungen BCU... im einzelnen gestaltet und die Arbeitsweise der Ablaufsteuerung CTL jeweils darauf ausgerichtet. Andererseits stellen die einheitlichen Schnittstellen SBI zur übergeordneten Teilsteuereinheit SCU... sicher, daß letztere unabhängig von der Ausbildung der anzuschließenden Leitungssysteme MB... für die Ein-/Ausgabemodule M einheitlich gestaltet werden können. Damit besteht ein sehr großer Freiheitsgrad in der Strukturierung des Ein-/Ausgabesystems, um unterschiedliche Leistungsanforderungen in weitem Rahmen erfüllen zu können.

## Patentansprüche

1. Ein-/Ausgabesystem mit mehreren an ein gemeinsames Leitungssystem (MB...) angeschlossenen Ein-/Ausgabemodulen für Datenverarbeitungsanlagen, wobei von den, von den Ein-/Ausgabemodulen (M) am gemeinsamen Leitungssystem (MB...) ausgehenden Anforderungen (MREQ) jeweils eine ausgewählt und von einer, über eine Zugriffssteuerung (z.B. Systembus CSBUS) den Zugriff zu einem gemeinsamen Arbeitsspeicher (ASP) der Datenverarbeitungsanlage ermöglichenden Steuereinheit (SCU) weitergeleitet wird,
**dadurch gekennzeichnet,**
- daß die Steuereinheit (SCU) aus wenigstens zwei gleich aufgebauten Teilsteuereinheiten (SCU0, SCU1) besteht, die parallel an einen gemeinsamen Anschluß der Zugriffssteuerung (CSBUS) angeschlossen sind und die jeweils mit einem gemeinsamen Leitungssystem (MB0, MB1) für den Anschluß von Ein-/Ausgabemodulen (M) gekoppelt sind,
- daß die Steuereinheit (SCU) eine gesonderte gemeinsame Anforderungsüberwachungseinheit (MBREQ-CTL) aufweist, die alle angeschlossenen Leitungssysteme (MB0, MB1) auf das Vorliegen einer weiterzuleitenden Anforderung (REQ...) von einem der angeschlossenen Ein-/Ausgabemodule (M) überwacht und gleichzeitige Anforderungen der angeschlossenen gemeinsamen Leitungssysteme (MB0, MB1) nacheinander entsprechend einem sich dynamisch verändernden Prioritätsschema berücksichtigt und
- daß die gesonderte Anforderungsüberwachungseinheit (MBREQ-CTL) abhängig von dem jeweils bevorrechtigten Leitungssystem (z.B. MB0) die Signal- und Datenwege der zugehörigen Teilsteuereinheit (SCU0) zum gemeinsamen Anschluß durchschaltet, so daß das anstehende Anforderungssignal von der ausgewählten Teilsteuereinheit (SCU0) unmittelbar zur Zugriffssteuerung (CSBUS) weitergeleitet wird.

2. Ein-/Ausgabesystem nach Anspruch 1,
**dadurch gekennzeichnet,** daß die Steuereinheit (SCU) integrierter Bestandteil eines mit der Zugriffssteuerung (CSBUS) gekoppelten Ein-/Ausgabe-Prozessors (IOP) ist.

3. Ein-/Ausgabesystem nach Anspruch 1,
**dadurch gekennzeichnet**, daß die Steuereinheit (SCU) eine eigenständige mit der Zugriffssteuerung (CSBUS) gekoppelte Verarbeitungseinheit ist.

4. Ein-/Ausgabesystem nach Anspruch 2 oder 3,
**dadurch gekennzeichnet**, daß die gemeinsamen Leitungssysteme (MB0, MB1) für die Ein-/Ausgabe-Module (M) unmittelbar mit den Teilsteuereinheiten (SCU0, SCU1) gekoppelt sind.

5. Ein-/Ausgabesystem nach Anspruch 2 oder 3,
**dadurch gekennzeichnet**, daß die gemeinsamen Leitungssysteme (MB0, MB1) für die Ein-/Ausgabe-Module (M) über individuelle Leitungssystemsteuereinheiten (BCU0, BCU1) mit den Teilsteuereinheiten (SCU0, SCU1) gekoppelt sind.

6. Ein-/Ausgabesystem nach Anspruch 4,
**dadurch gekennzeichnet**, daß von einer Teilsteuereinheit (SCU...) weiterzuleitende Anforderungen jeweils erst weitergeleitet werden, wenn die mit der Anforderung verbundenen Daten und/oder Parameter in der jeweiligen Steuereinheit SCU) verfügbar sind.

7. Ein-/Ausgabesystem nach Anspruch 5,
**dadurch gekennzeichnet**, daß von der Leitungssteuereinheit (BCU...) und/oder Teilsteuereinheit (SCU...) weiterzuleitende Anforderungen jeweils erst weitergeleitet werden, wenn die mit der Anforderung verbundenen Daten und/oder Parameter in der jeweiligen Steuereinheit (BCU... bzw. SCU) verfügbar sind.

8. Ein-/Ausgabesystem nach Anspruch 6 oder 7,
**dadurch gekennzeichnet**, daß mit einer Steuereinheit (SCU) jeweils zwei gemeinsame Leitungssysteme (MB0 und MB1) mit Ein-/Ausgabemodulen (M) gekoppelt sind und die gesonderte Anforderungsüberwachungseinheit (MBREQ-CTL) aus einem RS-Flipflop (RS-FF) besteht, das von weiterzuleitenden Anforderungen (REQ0) des einen Leitungssystems (z.B. MB0) gesetzt und von weiterzuleitenden Anforderungen (REQ1) des anderen Leitungssystems (MB1) zurückgesetzt wird, wobei ein Umschalten des RS-Flipflops (RS-FF) bei gleichzeitigen Anforderungen nur möglich ist, wenn die den augenblicklichen Schaltzustand verursachende Anforderung zurückgenommen wird, und
wobei der jeweilige Schaltzustand die Weiterleitung der entsprechenden Anforderung steuert.

9. Ein-/Ausgabesystem nach Anspruch 6 oder 7,
**dadurch gekennzeichnet**, daß bei Steuereinheiten (SCU) mit mehr als zwei angekoppelten Leitungssystemen für die Ein-/Ausgabe-Module die gesonderte Anforderungsüberwachungseinheit aus einer Ringschaltung mit durch die Anforderungen der einzelnen Leitungssysteme als Steuereingänge dynamisch veränderbarem Auswahlspunkt besteht, wobei eine Umschaltung jeweils nach Zurücknahme der jeweils berücksichtigten Anforderung erfolgt.

10. Ein-/Ausgabesystem nach einem der Ansprüche 1 bis 8,
**dadurch gekennzeichnet**, daß die einzelnen Leitungssysteme (MB...) unterschiedlich ausgebildet sind.

## Claims

1. Input/output system having a plurality of input/output modules, connected to a common line system (MB...), for data processing equipment, in each case one of the requests (MREQ) originating from the input/output modules (M) at the common line system (MB...) being selected and being passed on by a control unit (SCU) which, via an access controller (e.g. system bus CSBUS), makes possible access to a common main memory (ASP) of the data processing equipment, characterized
- in that the control unit (SCU) comprises at least two subcontrol units (SCU0, SCU1) which are of identical design and which are connected in parallel to a common port of the access controller (CSBUS) and which are each coupled to a common line system (MB0, MB1) for the connection of input/output modules (M),
- in that the control unit (SCU) has a separate common request monitoring unit (MBREQ-CTL) which monitors all the connected line systems (MB0, MB1) for the presence of a request (REQ...), to be passed on, from one of the connected input/output modules (M) and successively takes into account simultaneous requests of the connected common line systems (MB0, MB1) in accordance with a priority scheme which varies dynamically, and
- in that the separate request monitoring unit (MBREQ-CTL) switches through the signal paths and data paths of the associated subcontrol unit (SCU0) to the common port as a function of the respectively prioritized line system (e.g. MB0), so that the request signal which is present is passed on directly to the access controller (CSBUS) by the selected subcontrol unit (SCU0).

2. Input/output system according to Claim 1, characterized in that the control unit (SCU) is an integrated component of an input/output processor (IOP) which is coupled to the access controller (CSBUS).

3. Input/output system according to Claim 1, characterized in that the control unit (SCU) is an independent processing unit which is coupled to the access controller (CSBUS).

4. Input/output system according to Claim 2 or 3, characterized in that the common line systems (MB0, MB1) for the input/output modules (M) are coupled directly to the subcontrol units (SCU0, SCU1).

5. Input/output system according to Claim 2 or 3, characterized in that the common line systems (MB0, MB1) for the input/output modules (M) are coupled to the subcontrol units (SCU0, SCU1) via individual line system control units (BCU0, BCU1).

6. Input/output system according to Claim 4, characterized in that requests which are to be passed on from a subcontrol unit (SCU...) are respectively not passed on until the data and/or parameters associated with the request are available in the respective control unit (SCU).

7. Input/output system according to Claim 5, characterized in that requests which are to be passed on from the line control unit (BCU...) and/or subcontrol unit (SCU...) are respectively not passed on until the data and/or parameters associated with the request are available in the respective control unit (BCU... and/or SCU).

8. Input/output system according to Claim 6 or 7, characterized in that in each case two common line systems (MB0 and MB1) with input/output modules (M) are coupled to one control unit (SCU), and the separate request monitoring unit (MBREQ-CTL) comprises an RS flip-flop (RS-FF) which is set by requests (REQ0), to be passed on, of one line system (e.g. MB0) and is reset by requests (REQ1), to be passed on, of the other line system (MB1), it being possible for the RS flip-flop (RS-FF) to switch over in the case of simultaneous requests only if the request causing the instantaneous switched state is rescinded, and the respective switched state controlling the passing on of the corresponding request.

9. Input/output system according to Claim 6 or 7, characterized in that, in the case of control units (SCU) with more than two coupled line systems for the input/output modules, the separate request monitoring unit comprises a ring circuit with a selection point which can vary dynamically as a result of the requests of the individual line systems as control inputs, switching over taking place in each case after the respective request taken into account has been rescinded.

10. Input/output system according to one of Claims 1 to 8, characterized in that the individual line systems (MB...) are of different design.

## Revendications

1. Système d'entrée / sortie avec plusieurs modules d'entrée / sortie connectés sur un système de ligne commun (MB...) pour des systèmes de traitement de données dans lequel parmi les demandes (MREQ) provenant des modules d'entrée / sortie (M) du système de ligne commun (MB...), à chaque fois une d'entre elles est sélectionnée et transmise par une unité de commande SCU permettant, par l'intermédiaire d'une commande d'accès (par exemple bus de système CSBUS), l'accès à une mémoire de travail commune (ASP) de l'installation de traitement de données,
**caractérisé**
- en ce que l'unité de commande (SCU) se compose d'au moins deux unités de commande partielle identiques (SCU0, SCU1), qui sont connectées en parallèle à une connexion commune de la commande d'accès (CSBUS) et qui sont chaque fois couplées avec un système de ligne commune (MB0, MB1) pour la connexion de modules d'entrée / sortie (M),
- en ce que l'unité de commande (SCU) présente une unité séparée et commune de surveillance de demande (MBREQ-CTL) qui surveille tous les systèmes de ligne raccordés (MB0, MB1) en ce qui concerne la présence d'une demande à transmettre (REQ...) par un des modules d'entrée / sortie (M) connectés et tient compte des demandes simultanées des systèmes de ligne communs raccordés (MB0, MB1) l'un après l'autre conformément à un schéma de priorité se modifiant dynamiquement et
- en ce que l'unité séparée de surveillance de demande (MBREQ-CTL) interconnecte en fonction du système de ligne prioritaire (par exemple MB0) les voies de signaux et de données de l'unité de commande partielle (SCU0) correspondante vers la commutation commune de sorte que le signal de demande présent est transmis directement à la commande d'accès (CSBUS) par l'unité de commande partielle (SCU0) sélectionnée.

2. Système d'entrée / sortie selon la revendication 1,
**caractérisé en ce que** l'unité de commande (SCU) est un composant intégré d'un processeur d'entrée / sortie (IOP) couplé avec la commande d'accès (CSBUS).

3. Système d'entrée / sortie selon la revendication 1,
**caractérisé en ce que** l'unité de commande (SCU) est une unité de traitement indépendante couplée avec la commande d'accès (CSBUS).

4. Système d'entrée / sortie selon la revendication 2 ou 3,
**caractérisé en ce que** les systèmes de ligne communs (MB0, MB1) pour les modules d'entrée / sortie (M) sont couplés directement avec les unités de commande partielles (SCU0, SCU1).

5. Système d'entrée / sortie selon la revendication 2 ou 3,
**caractérisé en ce que** les systèmes de ligne communs (MB0, MB1) pour les modules d'entrée / sortie (M) sont couplés avec les unités de commandes partielles (SCU0, SCU1) par l'intermédiaire d'unités individuelles de commande du système de ligne (BCU0, BCU1).

6. Système d'entrée / sortie selon la revendication 4,
**caractérisé en ce que** les demandes à transmettre par une unité de commande partielle (SCU...) ne sont chaque fois transmises que lorsque les données et/ou les paramètres associés à la demande sont disponibles dans l'unité de commande respective (SCU).

7. Système d'entrée / sortie selon la revendication 5,
**caractérisé en ce que** les demandes à transmettre par l'unité de commande de ligne (BCU...) et/ou l'unité de commande partielle (SCU...) ne sont chaque fois transmises que lorsque les données ou les paramètres associés à la demande sont disponibles dans l'unité de commande correspondante (BCU... resp. SCU).

8. Système d'entrée / sortie selon la revendication 6 ou 7,
**caractérisé en ce qu**'avec une unité de commande (SCU) chaque fois deux systèmes de ligne communs (MB0 et MB1) sont couplés avec des modules d'entrée / sortie (M) et en ce que l'unité séparée de surveillance de demande (MBREQ-CTL) se compose d'un flip-flop RS (RS-FF), qui est positionné par les demandes à transmettre (REQ0) d'un des systèmes de ligne (par exemple MB0) et retiré par les demandes à transmettre (REQ1) de l'autre des systèmes de ligne (MB1), alors qu'une commutation de flip-flop RS (RS-FF) avec des demandes simultanées n'est possible que si la demande causant l'état momentané de commutation est retirée et alors que l'état de commutation commande à chaque fois la transmission de la demande correspondante.

9. Système d'entrée / sortie selon la revendication 6 ou 7,
**caractérisé en ce qu**'avec des unités de commande (SCU) avec plus de deux systèmes de ligne couplés pour les modules d'entrée / sortie, l'unité séparée de surveillance de demande se compose d'un circuit en boucle avec point de sélection dynamiquement modifiable par les demandes des différents systèmes de ligne sous forme d'entrée de commande, une commutation se produisant chaque fois après la reprise de la demande respective prise en considération.

10. Système d'entrée / sortie selon l'une des revendications 1 à 8,
**caractérisé en ce que** les différents systèmes de ligne (MB...) sont conformés différemment.
